# EUROPÄISCHE PATENTSCHRIFT

(11) **EP 1 245 451 B1**
(45) Veröffentlichungstag und Bekanntmachung des Hinweises auf die Patenterteilung: **21.05.2008**
(21) Anmeldenummer: 02405229.2
(22) Anmeldetag: 25.03.2002
(51) Int. Cl.: B60R 13/10

(54) **Halterung für ein Nummernschild eines Fahrzeuges, insbesondere eines Motorrades**
Licence plate support for a vehicle, for a motorcycle in particular
Support de plaque d'immatriculation de véhicule, en particulier de motocyclette

(30) Priorität: 26.03.2001 CH 5632001
(43) Veröffentlichungstag der Anmeldung: 02.10.2002
(73) Patentinhaber: Eberle, Hansruedi, 8755 Ennenda (CH); Eberle, Sonia, 8755 Ennenda (CH)
(72) Erfinder: Eberle, Hansruedi, 8755 Ennenda (CH); Eberle, Sonia, 8755 Ennenda (CH)
(74) Vertreter: Luchs, Willi

(56) Entgegenhaltungen:
- CH-A- 393 115
- CH-A- 689 587
- DE-A- 19 902 181
- DE-U- 20 013 560

## Beschreibung

Die Erfindung betrifft eine Halterung für ein Nummernschild eines Fahrzeuges, insbesondere eines Motorrades, gemäss dem Oberbegriff des Anspruches 1.

Die Nummernschilder werden bei Motorrädern oder anderen Zweirad-Fahrzeugen in der Regel direkt auf einen Fahrzeugteil, z.B. ein Hinterrad-Schutzblech, oder auf einen am Fahrzeug vorgesehenen Nummernschildträger mittels Schrauben angebracht. Bei jedem Nummernschildwechsel muss der Befestigungsvorgang wiederholt werden, wozu jedesmal neben den Befestigungsschrauben auch ein Werkzeug, ein Schraubenzieher, benötigt wird.

Das Dokument CH-A-689 587 zeigt ein Chassis für die Fixierung eines Nummernschildes mit einem Rahmen, welcher an der Oberseite einen oder mehrere Vorsprünge und auf der Unterseite einen laschenartigen Schenkel aufweist. Das Nummernschild kann durch Einlegen beim unteren Rahmenteil auf der Innenseite dieses Schenkels und dann durch Einschwenken bzw. Eindrücken in den Rahmen in die fixierte Position gebracht werden. Das Schild biegt beim Eindrücken den aufgrund der elastischen Ausbildung krümmbaren Vorsprung nach oben. Nach dem Eindrücken des Schildes in den Rahmen bewirkt dieser Vorsprung ein Einrasten. Ein federartig ausgebildetes Rückhalteblech dient als rückseitigen Anschlag des Schildes. Beim Herausnehmen des Nummernschildes muss indessen dieser Vorsprung von Hand nach oben abgebogen werden, so dass das Schild dann gefasst und ausgeschwenkt werden kann.

Bei der Druckschrift CH-A-393 115 ist eine Einrichtung zur Befestigung eines Kontrollschildes für Motorfahrzeuge geoffenbart, welche einen dem Kontrollschild angepassten Rahmen hat, der auf seiner Schmalseite eine Einschiebeöffnung und bei den übrigen Seiten je eine Führung bildet, so dass das Kontrollschild im montierten Zustand mit seinen Rändern allseitig von Rahmenteilen umfasst wird. In der Einschiebeöffnung sind keilförmige Rasten angeordnet, welche nach dem Einschieben des Schildes in den Rahmen mit ihren Rastenflächen das Schild stirnseitig umgreifen und das Schild im Rahmen entsprechend sichern. Beim Herausnehmen des Schilden muss jedoch ein Werkzeug, bspw. ein Schraubenzieher zu Hilfe genommen werden, um die Raster aus der Einschiebeöffnung wegzudrücken.

Bei der Vorrichtung nach der Druckschrift DE-Gbm-200 13 560 sind mehrere rasthakenähnliche, elastisch bewegliche Halteelemente vorgesehen, die ein Einrasten eines Kraftfahrzeugkennzeichens ermöglichen. Beim Demontieren des Kennzeichens muss jedoch genauso ein Werkzeug benutzt werden, um diese Halteelemente von dem Kennzeichen weg nach aussen zu drücken.

Der vorliegenden Erfindung liegt die Aufgabe zugrunde, eine Halterung für ein Fahrzeug-Nummernschild, insbesondere ein Motorrad-Nummernschild zu schaffen, die einen einfachen Nummernschildwechsel oder eine Entnahme und Wiederanbringen des Nummernschildes ermöglicht, ohne dass dazu ein Werkzeug benötigt wird, und dass ausserdem eine einfache Herstellung ermöglicht wird.

Die Aufgabe ist erfindungsgemäss durch eine Halterung mit den Merkmalen des Anspruches 1 gelöst.

Durch Vorhandensein eines am Fahrzeug montierbaren Halteteiles, der mit zwei gegenüberliegenden Laschen versehen ist, die Führungsmittel für das Nummernschild bilden, welches bis zu einem Anschlagelement in den Halteteil einschiebbar und in der am Anschlagelement anliegenden Stellung mittels eines elastisch auslenkbaren Rastelementes fixierbar ist, kann ein rascher Wechsel des Nummernschildes oder seine Entnahme und Wiederanbringen (beispielsweise beim vorübergehenden Einstellen des Fahrzeuges) bewerkstelligt werden, ohne dass dazu ein Werkzeug benötigt wird. Der Halteteil muss nur einmal am Fahrzeug bzw. an einem am Fahrzeug vorhandenen Nummernschildträger befestigt, z.B. angeschraubt werden.

Weitere bevorzugte Ausgestaltungen der erfindungsgemässen Halterung bilden den Gegenstand der abhängigen Ansprüche.

Die Erfindung wird nachfolgend anhand der Zeichnung näher erläutert. Es zeigen:
- Fig.1: ein Ausführungsbeispiel einer erfindungsgemässen Halterung für ein Motorrad-Nummernschild in Frontansicht;
- Fig.2: die Halterung nach Fig. 1 in Draufsicht;
- Fig. 3: die Halterung nach Fig. 1 in Pfeilrichtung A;
- Fig. 4: die Halterung nach Fig. 1 in Pfeilrichtung B;
- Fig. 5a: ein Rastelement als Teil der Halterung nach Fig. 1 in Frontansicht; und
- Fig. 5b: das Rastelement nach Fig. 5a in Draufsicht.

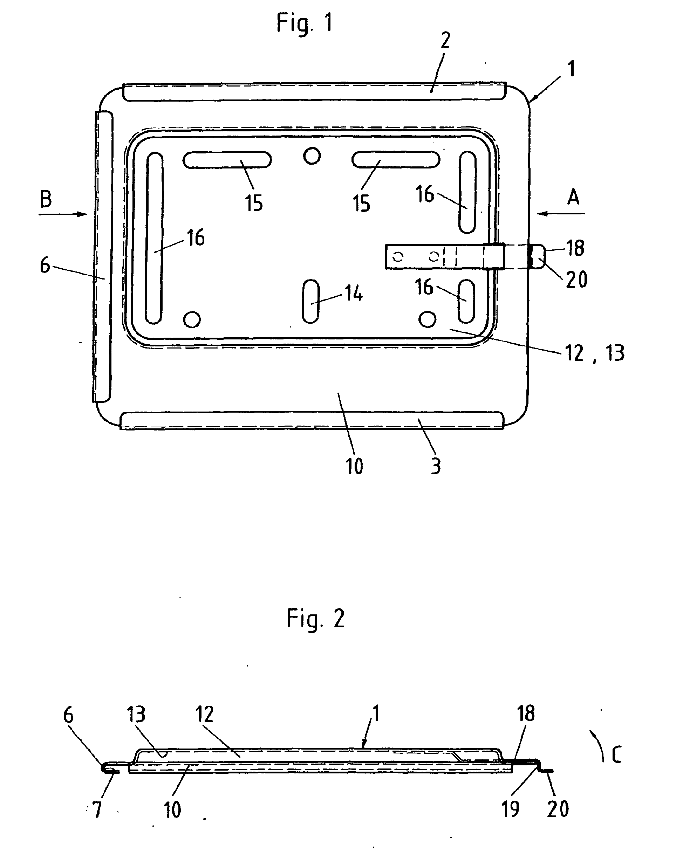

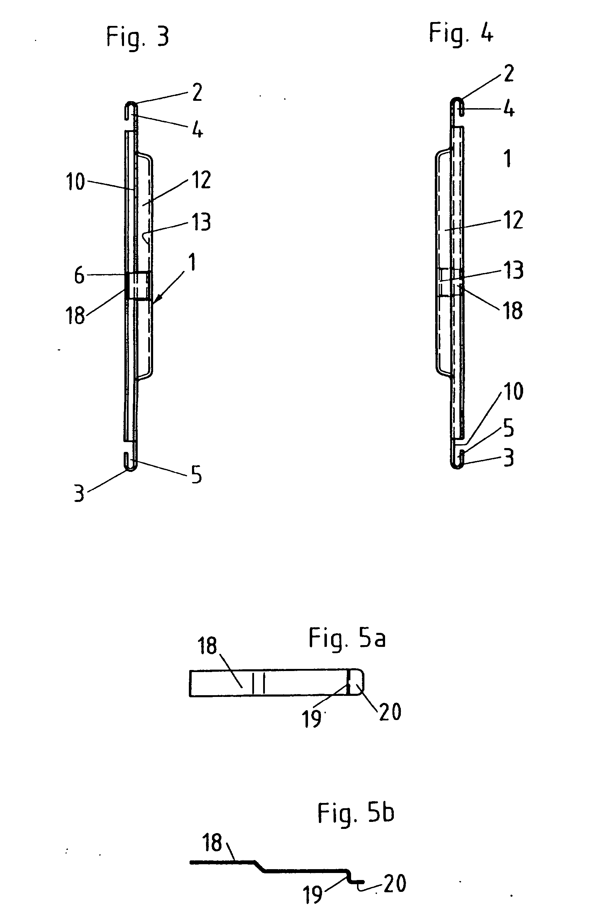

Gemäss Fig. 1 bis 4 umfasst eine Halterung für ein Fahrzeug-Nummernschild, insbesondere ein Motorrad-Nummernschild, einen Halteteil 1, der in seiner Grundrissform und Grösse im wesentlichen dem Nummernschild entspricht. Das Nummernschild selber ist in der Zeichnung nicht dargestellt. Der in Grundrissform im wesentlichen rechteckförmige Halteteil 1 weist auf seinen zwei gegenüberliegenden Seiten, gegebenenfalls den Längsseiten, je eine Lasche 2, 3 auf, die je eine im Querschnitt U-förmige Führungsnut 4, 5 (vgl. Fig. 3 und 4) für das Nummernschild bildet. Auch eine der Querseiten des Halteteils 1 ist mit einer im Querschnitt U-förmigen Lasche 6 versehen, die mit ihrer Innenfläche 7 einen Anschlag für das in die Führungsnuten 4, 5 in Pfeilrichtung A nach Fig. 1 einschiebbare Nummernschild bildet. Eine Auflagefläche des Halteteils 1 für das Nummernschild ist in Fig. 1 bis 4 mit 10 bezeichnet.

Der Halteteil 1 weist eine zentrale Vertiefung 12, deren Grundfläche 13 in einem Abstand von der Auflagefläche 10 für das Nummernschild angeordnet ist. Es sind mehrere, gegebenenfalls sechs Öffnungen 14 bzw. 15 bzw. 16 über die Grundfläche 13 verteilt im Halteteil 1 angefertigt, die eine Längsschlitz-Form aufweisen, und die zum Einführen von in der Zeichnung nicht dargestellten Befestigungselementen, beispielsweise Schrauben, vorgesehen sind, mittels welchen der Halteteil 1 auf einem Fahrzeugteil, z.B. einem Hinterrad-Schutzblech, oder auf einem am Fahrzeug vorgesehenen Nummernschildträger befestigt wird. Dabei können - je nach Form der am Fahrzeug zur Befestigung zur Verfügung stehenden Fläche - verschiedene Öffnungen 14, 15 bzw. 16 zum Einsatz kommen, zum Beispiel die in einer zentralen Ebene des Halteteils 1 liegende Öffnung 14 und die beiden zu der zentralen Ebene symmetrisch angeordneten Öffnungen 15 (oder die Öffnungen 16). Durch den Abstand zwischen der Grundfläche 13 der Vertiefung 12 und der Auflagefläche 10 für das Nummernschild ist ausreichend Platz zum Unterbringen von beispielsweise Schraubenköpfen vorhanden, so dass das Einschieben des Nummernschildes durch diese nicht beeinträchtigt wird.

Der die Vertiefung 12 aufweisende Halteteil 1 und die Laschen 2, 3 und 6 sind einstückig ausgebildet. Vorzugsweise handelt es sich bei diesem Halteteil 1 um ein in einem Bearbeitungsverfahren, vorzugsweise einem Stanz- oder Laserverfahren hergestelltes Metallstück. Allerdings wäre auch ein in einem Spritzgiessverfahren hergestellter Halteteil 1 aus Kunststoff denkbar.

Zum Festhalten des in die Führungsnuten 4, 5 bis zur Anschlagfläche 7 eingeführten Nummernschildes im Halteteil 1 ist auf der der Anschlagfläche 7 gegenüberliegenden Seite des Halteteils 1 - etwa in der Mitte dieser Seite - ein Rastelement 18 (vgl. auch Fig. 5a, 5b) aus einem elastisch nachgiebigen Material (z.B. Federstahl) vorgesehen, das eine Abstützfläche 19 für das Nummernschild aufweist. Dabei wird das Rastelement 18 mit seinem der Abstützfläche 19 abgewandten Ende am Halteteil 1 befestigt, beispielsweise angeschweisst, derart, dass es mit dem die Abstützfläche 19 aufweisenden Ende quer zur Einschubrichtung des Nummernschildes, in Pfeilrichtung C nach Fig. 2, elastisch ausgelenkt werden kann, um das Einschieben oder Herausschieben des Nummernschildes zu ermöglichen. Die Befestigungsstelle des Rastelementes 18 am Halteteil 1 bildet den Auslenkungsdrehpunkt. Die Auslenkung wird über eine Grifffläche 20 des Rastelementes 18 bewerkstelligt. Die Auslenkung kann durch eine Anschlagfläche des Halteteils 1 oder ein mit dem Halteteil 1 verbundenes Sicherungsteil (nicht dargestellt) in ihrer maximalen Grösse begrenzt werden, um ein unvorgesehenes Abbiegen oder gar Abbrechen des Rastelementes 18 zu verhindern.

Beim dargestellten Ausführungsbeispiel des Halteteiles 1 wird das Nummernschild seitlich eingeschoben. Selbstverständlich könnte die Einschiebung bei entsprechender Anordnung der die Führungsmittel für das Nummernschild bildenden Laschen und der als Anschlag dienenden Lasche von der einen oder anderen Seite oder auch von oben erfolgen. Die die Führungsmittel bildenden Laschen könnten im Querschnitt auch anders als U-förmig ausgebildet sein. Anstelle der Lasche 6 könnte auch ein anderes Anschlagelement vorgesehen sein. Auch könnte das Rastelement eine durchaus andere Form aufweisen, als in der Zeichnung dargestellt.

Die erfindungsgemässe Halterung ist für das auswechselbare Anbringen eines Motorrad-Nummernschildes vorgesehen, sie könnte jedoch auch bei anderen Fahrzeugen, z.B. Zweirad-Fahrzeugen, Nutzfahrzeugen, Anhängern etc. Anwendung finden.

Zudem könnte diese Halterung eine zusätzliche Tafelfläche aufweisen, auf welcher sich eine Vignette oder irgendwelche Marken aufkleben lassen würden. Diese Tafelfläche könnte vorteilhaft oben oder unten an dem Halteteil befestigt sein.

Die Lasche 2 oder 3 ist vorteilhaft derart dimensioniert, dass darauf ein Werbeaufdruck ermöglicht wird.

## Patentansprüche

1. Halterung für ein Nummernschild eines Fahrzeuges, insbesondere eines Motorrades, mit einem am Fahrzeug montierbaren Halteteil (1), der mit Laschen (2, 3) versehen ist, die Führungsmittel für das Nummernschild bilden, welches bis zu einem Anschlagelement (6) in den Halteteil (1) einschiebbar und in der am Anschlagelement (6) anliegenden Stellung mittels eines elastisch auslenkbaren Rastelementes (18) fixierbar ist, **dadurch gekennzeichnet, dass**
zwei gegenüberliegende Laschen (2, 3, 6) mit dem Halteteil (1) einstückig ausgebildet sind, dass der Halteteil (1) eine Vertiefung (12) aufweist, deren Grundfläche (13) in einem Abstand von einer Auflagefläche (10) für das Nummernschild angeordnet ist, wobei die Grundfläche (13) mit Öffnungen (14, 15, 16) versehen ist, die für Befestigungselemente zur Befestigung des Halteteils (1) am Fahrzeug vorgesehen sind, wobei das aus einem elastisch nachgiebigen Material, zum Beispiel Federstahl, hergestellte Rastelement (18) am Halteteil (1) befestigt ist.

2. Halterung nach Anspruch 1, **dadurch gekennzeichnet, dass** die Führungsmittel durch je eine im Querschnitt U-förmige Führungsnut (4, 5) gebildet sind.

3. Halterung nach Anspruch 1 oder 2, **dadurch gekennzeichnet, dass** das Anschlagelement durch eine zu den beiden die Führungsmittel bildenden Laschen (2, 3) rechtwinklig angeordnete, weitere Lasche (6) gebildet ist.

4. Halterung nach einem der Ansprüche 1 bis 3. **dadurch gekennzeichnet, dass** der Halteteil (1) aus Metall besteht und in einem Bearbeitungsverfahrcn, vorzugsweise einem Stanz- oder Laserverfahren, hergestellt wird.

5. Halterung nach einem der Ansprüche 1 bis 3, **dadurch gekennzeichnet, dass** der Halteteil (1) aus Kunststoff besteht und durch einen Druck- oder Formguss oder in einem Bearbeitungsverfahren hergestellt wird.

6. Halterung nach einem der Ansprüche 1 bis 5, **dadurch gekennzeichnet, dass** vorzugsweise unten oder oben am Halteteil (1) eine zusätzliche Tafelfläche gebildet oder befestigt ist, welche dazu dient, dass darauf eine Vignette oder irgendwelche Marke aufgeklebt werden kann.

## Claims

1. Support for a number plate of a vehicle, especially of a motorcycle, with a support part (1) mountable at the vehicle, which is provided with tongues (2, 3), which form guide means for the number plate, which is slidable into the support part (1) till a stop element (6) and in the touching position at the stop element (6) it is fixable by an elastically bendable clip element (18), **characterised in that**
two opposite tongues (2, 3, 6) with the support part (1) are made of a single piece, that the support part (1) has a deepening (12), whose ground face (13) is arranged in a distance to a support face (10) for the number plate, whereby the ground face (13) is provided with openings (14, 15, 16), which serve for fastening elements for the fixation of the support part (1) at the vehicle, whereby the clip element (18) made by a elastically yielding material, for instance spring steel, is fastened at the support part (1).

2. Support according to claim 1, **characterised in that** each of the guide means are formed by a U-shaped groove (4, 5) in cross section.

3. Support according to claim 1 or 2, **characterised in that** the stop element is formed by an additional tongue (6), which is rectangular arranged to both of the guide means formed by the tongues (2, 3).

4. Support according to one of the claims 1 to 3, **characterised in that** the support part (1) consists of metal and is manufactured by a working operation, especially by a punch press or a laser process.

5. Support according to one of the claims 1 to 3, **characterised in that** the support part (1) consists of plastic and is manufactured in a pressure or a mould casting or in a working operation.

6. Support according to one of the claims 1 to 5, **characterised in that** preferably on the bottom or on the top of the support part (1) an additional panel face is shaped or fastened, which serves, that a vignette or a whichever brand can be sticked on it.

## Revendications

1. Support de plaque d'immatriculation d'un véhicule, notamment d'une motocyclette, comprenant une pièce (1) de maintien pouvant être montée sur le véhicule et munie de pattes (2, 3) qui forment des moyens de guidage de la plaque minéralogique, laquelle peut être glissée dans la pièce (1) de maintien jusqu'à un élément (6) de butée et peut être immobilisée dans la position appliquée à l'élément (6) de butée au moyen d'un élément (18) d'encliquetage pouvant être écarté élastiquement, **caractérisé en ce que**
deux pattes (2, 3, 6) opposées sont constituées d'un seul tenant avec la partie (1) de maintien, **en ce que** la partie (1) de maintien a une cavité (12) dont la surface (13) de fond est à distance d'une surface (10) d'appui de la plaque minéralogique, la surface (13) de fond étant munie d'ouvertures (14, 15, 16) prévues pour des éléments de fixation de la partie (1) de maintien au véhicule, l'élément (18) d'encliquetage en un matériau cédant élastiquement, par exemple en acier pour ressort, étant fixé à la partie (1) de maintien.

2. Fixation suivant la revendication 1, **caractérisée en ce que** les moyens de guidage sont formés par respectivement une rainure (4, 5) de guidage de section transversale en forme de U.

3. Fixation suivant la revendication 1 ou 2, **caractérisée en ce que** l'élément de butée est formé par une autre patte (6) disposée à angle droit par rapport aux deux pattes (2, 3) formant les moyens de guidage.

4. Fixation suivant l'une des revendications 1 à 3, **caractérisée en ce que** la partie (1) de maintien est en métal et est fabriquée par un procédé d'usinage, de préférence par un procédé d'estampage ou laser.

5. Fixation suivant l'une des revendications 1 à 3, **caractérisée en ce que** la partie (1) de maintien est en matière plastique et est fabriquée par moulage sous pression ou moulage en châssis ou dans un procédé d'usinage.

6. Fixation suivant l'une des revendications 1 à 5, **caractérisée en ce que**, de préférence, en dessous ou au-dessus de la partie (1) de maintien, est formée ou fixée une surface de tablette supplémentaire, qui sert à pouvoir y coller une vignette ou une marque quelconque.
